# EUROPEAN PATENT APPLICATION

(11) **EP 2 873 496 A1**
(43) Date of publication of application: **20.05.2015**
(21) Application number: 13005405.9
(22) Date of filing: 18.11.2013
(51) Int. Cl.: B25J 9/16

(54) **Printing system**

(71) Applicant: ABB Technology AG, 8050 Zürich (CH)
(72) Inventor: Matthias, Björn, 76669 Bad Schönborn (DE); Becker, Oliver, 69198 Schriesheim (DE)
(74) Representative: Kock, Ina

(57) **Abstract**

The invention is related to a printing system (10), comprising a control unit (12) for storing and executing a robot program, an industrial robot which is controllable by the control unit (12) and which comprises a robot arm (16 + 18 + 20 + 22 + 24 + 26) with at least three degrees of freedom in movement (28, 30, 32, 34, 36) whose tip (38, 96) is movable along a predetermined movement path (62, 78) according to path data of the robot program. The printing system (10) is characterized by a controllable mechanical adapter unit (40, 98, 112, 122) with at least one actuator and one respective additional degree of freedom in movement (44, 46) which is mounted on the tip (38, 96) of the robot arm (16 + 18 + 20 + 22 + 24 + 26) and a printing unit (42, 100, 114, 124) which is mounted on the adapter unit (40, 98, 112, 122) and which is controllable by the control unit (12), which comprises at least one print nozzle for applying pointwise a respective portion of a print material at respective coordinates (64, 66) according to object data of the robot program, means for predictive determination of the actual position of the tip (38, 96) of the robot arm (16 + 18 + 20 + 22 + 24 + 26). The at least one actuator of the mechanical adapter unit (40, 98, 112, 122) is controllable in such a way that a difference between the predictive determination of the actual position and the predetermined movement path of the tip (38, 96) of the robot arm (16 + 18 + 20 + 22 + 24 + 26) is compensated (84, 86) in terms of applying the print material at the desired respective coordinates (64, 66) according to object data of the robot program.

## Description

The invention relates to a printing system, comprising a control unit for storing and executing a robot program, an industrial robot which is controllable by the control unit and which comprises a robot arm with at least three degrees of freedom in movement and with a tip that is movable along a predetermined movement path according to path data of the robot program.

Printing systems like plotters are known for printing individual pictures on a surface of for example a poster or another object. For such systems, a printing head is typically moved relatively along the surface of a paper respectively an object to be imprinted in X- Y- direction by a Cartesian manipulator. Dependent on the respective picture to be printed a respective portion of print material like a portion of ink is applied at respective coordinates of the surface by the printing head. Printing systems like those are on one side flexible concerning the picture to be printed, but on the other side rather slow concerning their printing speed. Thus such printing systems are suitable for rather individual production of a low quantity of objects to be imprinted.

But also for printing of 3D objects such plotter-like printing systems are known, wherein in this case the printing head does not apply an ink but a 3D printing material in several stacked layers. Thus it is also required that the printing head is moved in X- Y- Z- direction to consider also the physical height of the object to be printed. Disadvantageously within this state of the art is that the size of objects which can be imprinted respectively printed is limited to a certain size, for example 100cm x 100cm for printing of pictures respectively 50cm in xyz-direction for 3D. Objects of a larger dimension of several meters are not (im-) printable by use of a typical Cartesian manipulator.

It is on one hand known, that the use of industrial robots for such applications instead of a Cartesian manipulator opens up larger dimensions of the pictures to be imprinted respectively the 3D objects to be printed. Typical industrial robots might have a working range of 3m and more around their rotary base. On the other side the accuracy of such an industrial robot is not sufficient for the high requirements of such printing applications, which might be 0,1mm or less for example.

The objective of the invention consists in providing a flexible (im-) printing system for larger objects, which has an improved accuracy.

This problem is solved by a printing system of the aforementioned kind. This is characterized by
- a controllable mechanical adapter unit with at least one actuator and one respective additional degree of freedom in movement which is mounted on the tip of the robot arm,
- a printing unit which is mounted on the adapter unit and which is controllable by the control unit, which comprises at least one print nozzle for applying pointwise a respective portion of a print material at respective coordinates according to object data of the robot program,
- means for predictive determination of the actual position of the tip of the robot arm,
- wherein the at least one actuator of the mechanical adapter unit is controllable in that way, that a difference between the predictive determination of the actual position and the predetermined movement path of the tip of the robot arm is compensated in terms of applying the print material at the desired respective coordinates according to object data of the robot program.

Basic idea of the invention is on one side to use - despite its not sufficient accuracy - an industrial robot with its large working range as manipulator for actuating the printing unit and on the other side to foresee a mechanical adapter unit with additional degrees of freedom in movement to compensate a possible deviation of the movement of the robot arm.

Generally two kinds of deviations exist. According to the first variant the real movement path corresponds in principal to the predetermined movement path, but there is a difference between real and desired movement speed. In this case the application of a portion of print material can be time-shifted to that moment in time, when the print nozzle is passing a respective coordinate according to object data of the robot program. The mechanical adapter unit according to the invention is not necessarily used in this case.

According to the second variant the real movement path does not correspond to the predetermined movement path, thus a respective coordinate according to object data of the robot program can only be reached by use of the mechanical adapter unit according to the invention.

When applicating a portion of print material there is a difference between the coordinate of the print nozzle and the respective impact coordinate of the portion of print material on the surface of the object to be (im-) printed. Typically the robot control is prepared in that way, that the desired impact coordinates of the portion of print material are given within the desired movement path whereas the real movement path of the print nozzle is determined in that way, that it is in a fixed distance to the respective impact coordinates of the print material to avoid any collisions. The virtual impact point, which is always in a fixed distance to the print nozzle, is known as a TCP (Tool Center Point).

According to the invention, means for predictive determination of the actual position of the tip of the robot arm respectively its TCP respectively the at least one print nozzle are provided. Due to its large working range and the composed several degrees of freedom in movement an industrial robot might be subject to some deviation between the desired predetermined movement path and the real movement path. Those deviations are of high importance for the result of an object to be (im-) printed, since a misplaced portion of print material will reduce the quality of the object to be (im-) printed.

Predictive determination of an actual position implies, that basically a position in the nearest future might be estimated, for example the position of the TCP in 25ms or such. This time difference might be required for automatically preparing the compensation movements of the adapter unit. Thus deviations of the real position from the respective desired position of the print nozzle respectively the TCP can easily become detected. By use of the invention it is possible to take advantage of the typically large working space of an industrial robot for (im-) printing larger objects.

According to a further embodiment of the invention the printing unit is at least predominately made of lightweight material. In order to compensate any deviations from the movement path in a sufficient way, a fast control loop is required. The control loop also includes the compensation movements of the printing unit relatively to the tip of the robot arm. Those movements are driven by at least one actuator of the mechanical adapter unit. To enable also abrupt correction movements of the printing unit it is provided to reduce the inertia of the components to be moved by use of a lightweight material such as aluminum or plastic. Also the size of the printing unit as such should be reduced within the given frame conditions.

According to a further embodiment of the invention the at least one actuator of the mechanical adapter unit is a Piezo actuator. Piezo actuators are suitable to drive abrupt changing movements and have a low inertia themselves. Thus the use of Piezo actuators improves the time constant of the control loop in an advantageous way.

According to a further embodiment of the invention the industrial robot comprises at least six degrees of freedom in movement. If a robot arm for example comprises six degrees of freedom in movement, it is possible to reach each point within its working range in every orientation. Thus a certain over-redundancy in flexibility compared with a Cartesian manipulator with its three degrees of freedom in movement is given, which does not provide the possibility of orienting a tool. This over-redundancy can be used for example in an advantageous way to make the programming of a robot movement path more flexible.

According to a further embodiment of the invention the controllable mechanical adapter unit comprises three degrees of freedom in movement. The flexibility to compensate deviations is increased therewith in an advantageous way.

According to a further variant of the invention the industrial robot is a paint robot. Typical industrial robots for handling are provided for moving the tip of their arm between a start point and an end point. The kind of movement between these points is not of significant importance. A paint robot on the other side is provided to move its tip on the arm with a preferably constant speed along a given movement path. Here not only the start and end point of a movement are of importance, moreover the whole movement between these points is of importance. If a paint robot is slower than desired, the paint result will be too thick, if the movement path is deviating from its desired way, the paint result will be inhomogeneous. Paint robots are prepared to have a high accuracy along the whole movement path and are therefore highly suitable to be used as manipulators for a printing system. The deviations to be compensated by the adapter unit are reduced in an advantageous way therewith.

According to a further embodiment of the invention the means for predictive determination of the actual position comprises acceleration sensors, resolvers, encoders or laser interferometers for the respective axis of the robot, wherein respective measurement values therefrom are provideable to the control unit, which is prepared to derive therefrom a predicted value of the actual position of the at least one print nozzle.

Resolvers are typically used within industrial robots for determining the angle of pivoting of the respective robot members. Based on those data and by use of the geometry of the robot members it is possible to determine the actual position of the robot arm and of its TCP. The actual position data are normally used as input data for a control loop for the drives of the robot which cause the posture of the robot. Also when a control loop is provided an actual position of a robot arm might be subject to a deviation from the desired position.

According to a further embodiment of the printing system the means for predictive determination of the actual position are effective on a position close to the tip of the robot arm. Thus the position can become determined directly at a relevant point of interest and the accuracy is increased therewith. The means can either be mounted direct at the tip of the robot arm, for example a gyroscope, a kind of GPS system or such. But the means can also be mounted stationary in a robot booth and related to a reference mark on the robot arm - for example a laser-based distance measurement system.

According to a further embodiment of the invention either the control unit or a further control device is provided for controlling the mechanical adapter unit independently from the control of the tip of the robot arm. The control loop for the mechanical adapter unit is provided to compensate possible deviations within the control loop of the robot. Thus the time constant of the control loop for the mechanical adapter unit has to be faster than the time constant of the control loop of the robot, that's deviations have to be compensated. Hence both control loops operate independently each from each other. So a dedicated hardware for both control loops can be provided or a common hardware for operating the control loops independently from each other.

According to a further embodiment of the invention the printing unit comprises several individual controllable print nozzles for applying independently of each other point-wise a respective portion of a print material. A printing unit could for example comprise a row of ten print nozzles which are preferably oriented perpendicularly to the movement direction of the tip of the robot arm. Preferably the distance between adjacent nozzles should correspond to the typical distance of coordinates to be applied in the case that they are defined in a type of three-dimensional matrix or a multiple distance therefrom. Thus it is possible to apply several portions of print material in parallel and simultaneously.

Printing system according to any of the previous claims, characterized in that it is provided for three-dimensional printing of several layers of print material. In this case the print material is for example a kind of liquid plastic during application, which will harden immediately after a respective portion of print material has been applied on the surface of an object.

Further advantageous embodiments of the invention are mentioned in the dependent claims.

The invention will now be further explained by means of an exemplary embodiment and with reference to the accompanying drawings, in which:
- Figure 1: shows an exemplary printing system,
- Figure 2: shows an exemplary ideal movement path with coordinates,
- Figure 3: shows an exemplary real movement path with coordinates,
- Figure 4: shows an end of robot arm in ideal position,
- Figure 5: shows an end of robot arm in deviated position and
- Figure 6: shows end of robot arm in deviated position with compensation.

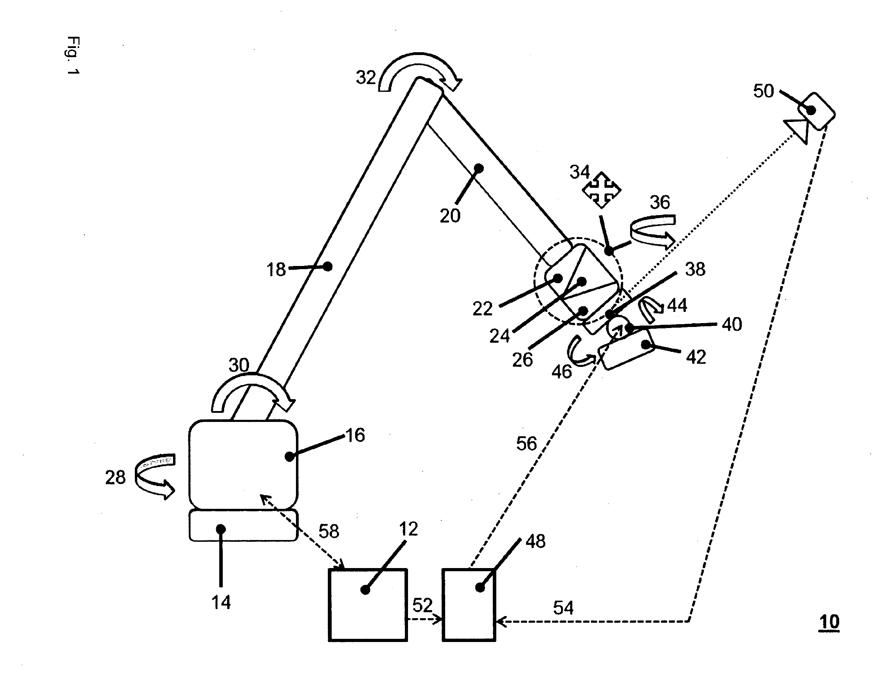

Fig. 1 shows exemplary printing system in a sketch 10. A control unit 12, for example a personal computer, is connected to a robot by use of a communication line 58. The robot comprises a robot base 14 and a mechanical chain of robot arm segments 16, 18, 20, 22, 24, 26 which are pivotable around respective axis of rotation, so that the robot arm comprises in total six degrees of freedom in movement as indicated with the arrows 28, 30, 32, 34, 36. The robot arm segments 22, 24, 26 are representing a so far called "hollow wrist".

At the tip 38 of the robot arm a mechanical adapter unit 40 is provided, which provides two additional degrees of freedom in movement and which is controlled by a further control device 48. At the other end of the mechanical adapter unit 40 a printing unit 42 is provided, which comprises a printing nozzle for applying respective portions of a print material on the surface of an object. Thus the printing unit 42 is moveable with totally eight degrees of freedom in movement, which means an over-redundancy of two degrees of freedom in movement.

According to data of a robot program, which is located and executed by the control unit 12, the robot arm segments 16, 18, 20, 22, 24, 26 are driven in such a way, that the tip 38 of the robot arm is moved along a predetermined movement path. The coordinates of the desired impact points of the respective portions of print material are stored as data within a robot program.

The mechanical adapter unit 40 comprises two actuators, for example Piezo actuators, which are controllable in such a way that possible deviations of the position and/or orientation of the robot arm are compensated in terms of applying the print material at the desired respective coordinates according to object data of the robot program. Thus, in case that the robot arm would not have any deviation from its desired movement path, the actuators of the adapter unit 40 would not be activated at all, since there is no deviation to be compensated at all. Piezo actuators are suitable for smaller compensation movements. In case of larger compensation movements drives like motors or such might be used.

A possible deviation of the real position of the tip of the robot arm from its desired movement path is determined by use of a camera 50 which is permanently observing the position of the tip 38 of the robot arm, for example by focussing on a certain mark or such. Picture data of the camera 50 are permanently provided to the further control device 48 by use of a communication line 54. The further control device 48 is prepared for deriving the actual position and orientation of the tip 38 of the robot arm therefrom. A respective desired position of the tip 38 of the robot arm according to the robot program is provided to the further control unit 48 by a communication line 52. In case of a possible difference between real and desired position respectively orientation a required compensation movement of the mechanical adapter unit is derived therefrom. The movements of the mechanical adapter unit 38 and the movements of the printing unit 42 therewith are controlled in such a way that each portion of print material is applied at the desired coordinates according to the robot program despite of respective deviations of the movements of the robot arm.

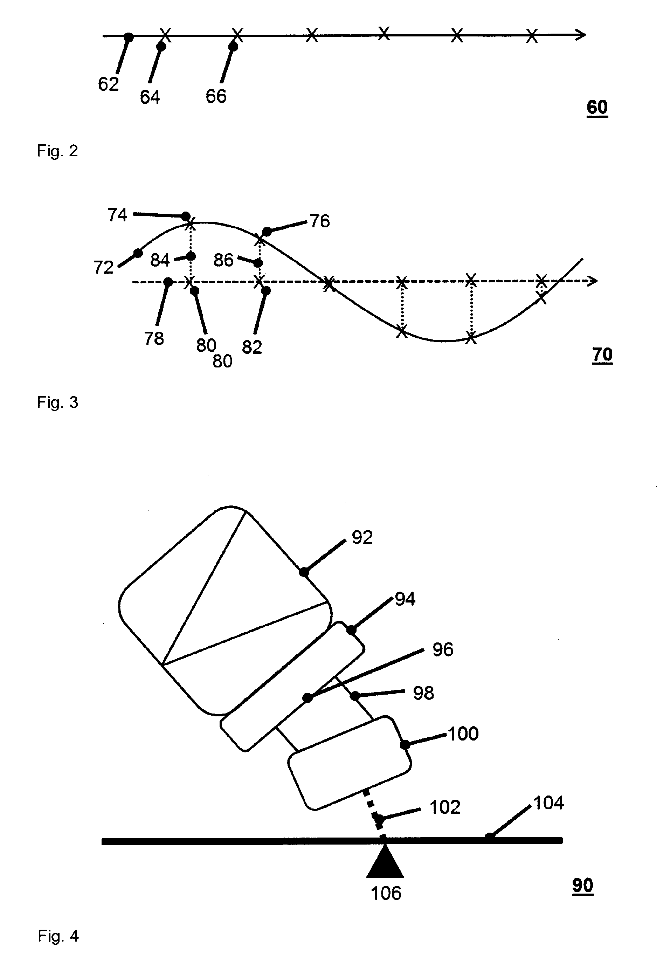

Fig. 2 shows an exemplary ideal movement path 62 with impact coordinates 64, 66 according to data of a robot program in a sketch 60. In the ideal case, the TCP of a robot arm would move exactly along the path and a respective portion of print material would be applied exactly at each impact coordinate 64, 66.

Fig. 3 shows an exemplary real movement path 72 with deviations from a respective ideal movement path 78 in a sketch 70. In case of a deviation, desired impact coordinates 80, 82 according to data of the robot program would automatically be influenced by this deviation wherein respective portions of print material would be applied at the coordinates 74, 76 instead at the ideal coordinates 80, 82. A mechanical adapter unit will cause an additional movement of a related printing unit so that the real impact points of respective portions of print material are shifted through respective compensation distances 84, 86 back to the ideal impact coordinates 80, 82.

Fig. 4 shows an end of robot arm in ideal position in a sketch 90. A hollow wrist 92 is representing the end of a robot arm. At the distal end of the robot arm an adapter plate 94 is provided wherefrom the tip of the robot arm is marked with the reference sign 96. A mechanical adapter unit 98 with two additional degrees of freedom in movement is mounted on the adapter plate 94. At the end of the mechanical adapter unit a printing unit is provided for applying respective portions of a print material in direction of the dotted line 102 on the surface an object 104. The robot arm is shown in an ideal position which corresponds to the desired position according to a robot program without any deviations.

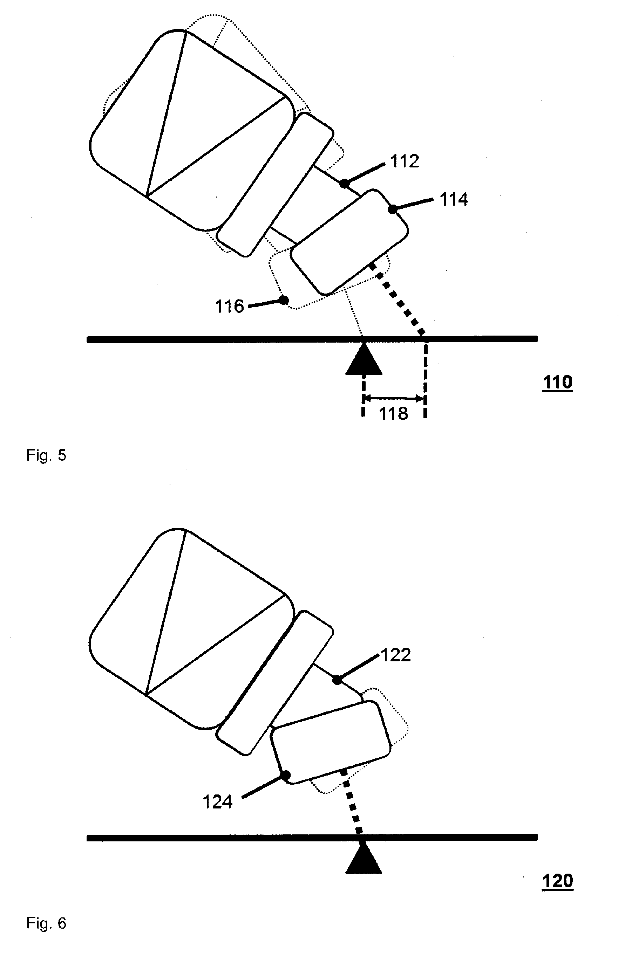

Fig. 5 shows an end of a robot arm in deviated position in a sketch 110. The ideal position without deviation is indicated with a robot arm in dotted lines. The whole orientation of the robot arm deviates by an angle of some degrees. The respective adapter unit 112 is shown without compensation, so that also the printing unit 114 mounted thereon is subject to a deviation from its ideal position, which is indicated with the dotted lines 116. As a consequence also the impact point of print material applied by the printing unit is deviated by a distance 118.

Fig. 6 shows an end of robot arm in deviated position with compensation in a sketch 120. The adapter unit is stronger angulated due to a compensation of the deviation. Thus also the printing unit has another orientation, so that the impact point of portions of print material corresponds to ideal coordinates as given in the data of a respective robot program.

### List of reference signs

- 10: exemplary printing system
- 12: control unit
- 14: robot base
- 16: first segment of robot arm
- 18: second segment of robot arm
- 20: third segment of robot arm
- 22: fourth segment of robot arm
- 24: fifth segment of robot arm
- 26: sixth segment of robot arm
- 28: degree of freedom in movement of first segment
- 30: degree of freedom in movement of second segment
- 32: degree of freedom in movement of third segment
- 34: degrees of freedom in movement of fourth and fifth segments
- 36: degree of freedom in movement of sixth segment
- 38: tip of robot arm
- 40: mechanical adapter unit
- 42: printing unit
- 44: first degree of freedom in movement of adapter unit
- 46: second degree of freedom in movement of adapter unit
- 48: further control device
- 50: camera
- 52: first communication line
- 54: second communication line
- 56: third communication line
- 58: fourth communication line
- 60: exemplary ideal movement path with coordinates
- 62: exemplary ideal movement path
- 64: first coordinate
- 66: second coordinate
- 70: exemplary real movement path with coordinates
- 72: exemplary real movement path
- 74: first coordinate with deviation
- 76: second coordinate with deviation
- 78: ideal movement path
- 80: first coordinate with compensated deviation
- 82: second coordinate with compensated deviation
- 84: compensation distance of first coordinate
- 86: compensation distance of second coordinate
- 90: end of robot arm in ideal position
- 92: hollow wrist of robot arm
- 94: adapter plate of robot arm
- 96: tip of robot arm
- 98: adapter unit of robot arm without compensation
- 100: printing unit in ideal position
- 102: flow path of portion of print material
- 104: object to be printed
- 106: ideal coordinate of deposition of print material
- 110: end of robot arm in deviated position
- 112: adapter unit of deviated robot arm without compensation
- 114: printing unit in deviated position
- 116: printing unit in ideal position
- 118: deviation distance of the impact point of print material
- 120: end of robot arm in deviated position with compensation
- 122: adapter unit of deviated robot arm with compensation
- 124: printing unit of deviated robot arm with compensation

## Claims

1. Printing system (10), comprising
• a control unit (12) for storing and executing a robot program,
• an industrial robot which is controllable by the control unit (12) and which comprises a robot arm (16 + 18 + 20 + 22 + 24 + 26) with at least three degrees of freedom in movement (28, 30, 32, 34, 36), the tip (38, 96) of said robot arm being movable along a predetermined movement path (62, 78) according to path data of the robot program,
**characterized by**
• a controllable mechanical adapter unit (40, 98, 112, 122) with at least one actuator and one respective additional degree of freedom in movement (44, 46) which is mounted on the tip (38, 96) of the robot arm (16 + 18 + 20 + 22 + 24 + 26),
• a printing unit (42, 100, 114, 124) which is mounted on the adapter unit (40, 98, 112, 122) and which is controllable by the control unit (12), which comprises at least one print nozzle for applying pointwise a respective portion of a print material at respective coordinates (64, 66) according to object data of the robot program,
• means for predictive determination of the actual position of the tip (38, 96) of the robot arm (16 + 18 + 20 + 22 + 24 + 26),
• wherein the at least one actuator of the mechanical adapter unit (40, 98, 112, 122) is controllable in such a way that a difference between the predictive determination of the actual position and the predetermined movement path of the tip (38, 96) of the robot arm (16 + 18 + 20 + 22 + 24 + 26) is compensated (84, 86) in terms of applying the print material at the desired respective coordinates (64, 66) according to object data of the robot program.

2. Printing system according to claim 1, **characterized in that** the printing unit (42, 100, 114, 124) is at least predominately made of lightweight material.

3. Printing system according to claim 1 or 2, **characterized in that** the actuator of the mechanical adapter unit (40, 98, 112, 122) is a Piezo actuator.

4. Printing system according to any of the proceeding claims, **characterized in that** the industrial robot comprises at least six degrees of freedom in movement (28, 30, 32, 34, 36).

5. Printing system according to any of the proceeding claims, **characterized in that** the controllable mechanical adapter unit (40, 98, 112, 122) comprises three degrees of freedom in movement (44, 46).

6. Printing system according to any of the proceeding claims, **characterized in that** the industrial robot is a paint robot.

7. Printing system according to any of the proceeding claims, **characterized in that** the means for predictive determination of the actual position comprise resolvers, encoders or laser interferometers for respective axis of segments (16, 18, 20, 22, 24, 26) of the robot arm (16 + 18 + 20 + 22 + 24 + 26), wherein respective measurement values therefrom are provideable (58) to the control unit (12).

8. Printing system according to any of the preceding claims, **characterized in that** the means for predictive determination of the actual position are effective on a position close to the tip (38, 96) of the robot arm (16 + 18 + 20 + 22 + 24 + 26).

9. Printing system according to any of the proceeding claims, **characterized in that** either the control unit (12) or a further control device (48) is provided for controlling the mechanical adapter unit (40, 98, 112, 122) independently from the control of the tip (38, 96) of the robot arm (16 + 18 + 20 + 22 + 24 + 26).

10. Printing system according to any of the previous claims, **characterized in that** the printing unit (42, 100, 114, 124) comprises several individual controllable print nozzles for applying independently of each other point-wise a respective portion of a print material.

11. Printing system according to any of the previous claims, **characterized in that** it is provided for three-dimensional printing of several layers of print material.
